# EUROPÄISCHE PATENTANMELDUNG

(11) **EP 2 722 583 A1**
(43) Veröffentlichungstag der Anmeldung: **23.04.2014**
(21) Anmeldenummer: 13188002.3
(22) Anmeldetag: 10.10.2013
(51) Int. Cl.: F21V 8/00

(54) **Leuchte zur Beleuchtung eines Raumes**

(30) Priorität: 19.10.2012 DE 202012104044 U; 21.12.2012 DE 202012012246 U
(71) Anmelder: Sattler, Ulrich, 73092 Heiningen (DE)
(72) Erfinder: Sattler, Ulrich, 73092 Heiningen (DE)
(74) Vertreter: Ruckh, Rainer Gerhard

(57) **Zusammenfassung**

Die Erfindung betrifft eine Leuchte (1) zur Beleuchtung eines Raumes oder eines Bereiches eines Raumes mit wenigstens einem Leuchtkörper. In diesem sind Lichtleitbahnen (6a, 6b) und Leuchtmittel vorgesehen, welche am oder im Leuchtkörper so angeordnet sind, dass von den Leuchtmitteln emittiertes Licht in die Lichtleitbahnen (6a, 6b) eingekoppelt wird. Der Leuchtkörper ist wenigstens teilweise transparent und dazu ausgebildet, dass das in den Lichtleitbahnen (6a) geführte Licht über den Leuchtkörper zur Beleuchtung des Raumes oder des Bereiches des Raumes abgestrahlt wird.

## Beschreibung

Die Erfindung betrifft eine Leuchte zur Beleuchtung eines Raumes.

Eine derartige Leuchte ist aus der DE 20 2008 009 783 U1 bekannt.

Diese Leuchte umfasst einen einen Hohlraum umschließenden ringförmigen Körper. In dessen Innenraum sind sich in Umfangsrichtung des Körpers erstreckende Leuchtmittel gelagert, welche Licht über eine Lichtaustrittsfläche abstrahlen, die von der inneren Mantelfläche des Körpers gebildet ist, welche den Hohlraum begrenzt.

Durch die ringförmige Ausgestaltung der Leuchte und die über die innere Mantelfläche des Körpers erfolgende Lichtabstrahlung wird ein leuchtender Innenring geschaffen, der einerseits, da die direkte Lichtstrahlrichtung innerhalb des Rings verläuft, ohne Gefahr eines Blendens auch von Personen direkt unterhalb der Leuchte betrachtet werden kann und andererseits auch von größerer Entfernung gut sichtbar ist.

Die Leuchte ist dabei bevorzugt mittels einer Halterung im Deckenbereich eines Raums so fixiert, dass der Körper und damit auch der leuchtende Innenring in einer horizontalen Ebene verläuft.

Dieser innenliegende Leuchtring bildet ein ästhetisches Stilmittel, welches den optischen Gesamteindruck der erfindungsgemäßen Leuchte erheblich steigert.

Der Erfindung liegt die Aufgabe zugrunde, eine Leuchte der eingangs genannten Art bereitzustellen, welche bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Leuchte zur Beleuchtung eines Raumes oder eines Bereiches eines Raumes mit wenigstens einem Leuchtkörper, in welchem Lichtleitbahnen vorgesehen sind. Von den Leuchtmitteln, welche am oder im Leuchtkörper angeordnet sind wird emittiertes Licht in die Lichtleitbahnen eingekoppelt, wobei der Leuchtkörper wenigstens teilweise transparent ist und dazu ausgebildet ist, dass das in den Lichtleitbahnen geführte Licht über den Leuchtkörper zur Beleuchtung des Raumes oder des Bereiches des Raumes abgestrahlt wird.

Mit der erfindungsgemäßen Leuchte kann eine flächige Ausleuchtung eines Raumes oder Raumbereichs innerhalb eines Gebäudes vorgenommen werden, das heißt das von den Leuchtmitteln in die Lichtleitbahnen abgestrahlte Licht bildet nicht, wie bei bekannten Zierelementen, eine passive Beleuchtung derart, dass nur die leuchtenden Lichtleitbahnen selbst sichtbar sind.

Vielmehr wird durch eine geeignete Dimensionierung der Abstrahlleistung der Leuchtmittel, der geometrischen Formen der Lichtleitbahn und der geometrischen und materialmäßigen Ausbildung des oder der Leuchtkörper erreicht, dass mit der erfindungsgemäßen Leuchte eine effiziente Raumausleuchtung erhalten wird.

Die Leuchte kann dabei als Deckenleuchte, als Wandleuchte oder auch als Standleuchte auf einer Unterlage wie einem Boden stehend ausgebildet sein, so dass mit der erfindungsgemäßen Leuchte unterschiedlichste Einsatzbereiche abgedeckt werden können.

Ein wesentlicher Vorteil der erfindungsgemäßen Leuchte besteht darin, dass durch die Einkopplung des von einzelnen Leuchtmitteln emittierten Lichts in Lichtleitbahnen aus einer punktförmigen Lichtquelle, wie sie ein Leuchtmittel wie zum Beispiel eine Leuchtdiode darstellt, eine linienförmige oder sogar flächig abstrahlende Leuchtquelle in Form der von Licht durchströmten Lichtleitbahn erhalten wird.

Besonders vorteilhaft hierbei ist, dass die Lichtleitbahnen in nahezu beliebiger Form und Größe in den Leuchtkörper eingearbeitet werden können.

Damit können die Abstrahlflächen der Leuchte, und damit auch die Raumausleuchtung, flexibel mit der Leuchte vorgegeben werden.

Zudem bilden die Lichtleitbahnen nicht nur Abstrahlflächen der Leuchten sondern auch von weitem sichtbare Lichtmuster, so dass die Lichtleitbahnen ein wesentliches ästhetisches Stilmittel bilden. Der ästhetische Gesamteindruck kann dabei durch eine Wahl der Lichtleitbahnen und der damit generierten Lichtmuster in weiten Grenzen gewählt werden.

Gemäß einer besonders vorteilhaften Ausgestaltung der Erfindung sind die Lichtleitbahnen von in den oder jeden Leuchtkörper eingearbeiteten Kanälen gebildet.

Die von den Leuchtmitteln emittierten Lichtstrahlen werden zu einem Teil an den Wänden der Kanäle total reflektiert. Dieser innerhalb des jeweiligen Kanals geführte Teil des Lichts bildet ein gut sichtbares Lichtmuster. Ein Teil des Lichts wird über die Grenzflächen der Kanäle zunächst in den jeweiligen Körper geführt und über diesen nach außen abgestrahlt, wodurch mit der Leuchte die gewünschte Raumausleuchtung erzielt wird. Vorteilhaft hierbei ist, wenn die einzelnen, die Lichtleitbahnen bildenden Kanäle eine über ihre Länge konstanten Anteil an Licht nach außen leiten, wodurch eine gleichförmige Flächenbeleuchtung mit der erfindungsgemäßen Leuchte erzielt wird.

Gemäß einer vorteilhaften Ausführungsform bilden die Lichtleitbahnen ausbildenden Kanäle Einfräsungen im jeweiligen Leuchtkörper.

Die Einfräsungen können einfach und rationell in die Leuchtkörper eingearbeitet werden, wobei die vorzugsweise maschinell durchgeführten Laser- oder Fräsvorgänge eine exakte, reproduzierbare Einarbeitung der Lichtleitbahnen in die Leuchtkörper gewährleisten.

Besonders vorteilhaft münden die Lichtleitbahnen bildenden Einfräsungen an Mantelflächen des Leuchtkörpers aus.

Die Einfräsungen können in diesem Fall besonders einfach als Oberflächenbearbeitungen der Leuchtkörper durchgeführt werden. Um in diesem Fall geschlossene Leuchtkörper zu erhalten, sind wenigstens zwei Leuchtkörper vorgesehen, die aufeinander gesetzt werden. Die von einem zweiten Leuchtkörper aufgesetzte Grenzfläche verschließt dann die an einer Mantelfläche des ersten Leuchtkörpers freiliegenden Lichtleitbahnen und umgekehrt.

Vorteilhaft ist wenigstens ein Leuchtkörper ein ein- oder mehrteiliger, transparenter Massivkörper, wobei insbesondere der oder jeder Leuchtkörper aus Acrylglas besteht.

Der oder die so ausgebildeten Leuchtkörper sind vollständig transparent, so dass die von den Lichtleitbahnen gebildeten Lichtmuster von allen Seiten sichtbar sind. Weiterhin können die aus den Lichtleitbahnen austretenden Lichtstrahlen ohne große Dämpfung den Leuchtkörper durchdringen, das heißt es entstehen wenig Lichtverluste. Schließlich kann durch die Formgebung der Leuchtkörper die Strahlführung der von der Leuchte abgestrahlten Lichtstrahlen vorgegeben werden. Besonders vorteilhaft bilden der oder die Leuchtkörper einen Diffusor, wodurch eine Abstrahlung von Licht in einem weiteren Raumbereich erhalten wird.

Prinzipiell kann der oder jeder Leuchtkörper eine offene Struktur bilden, das heißt beide Enden der jeweiligen Leuchtkörper enden frei, wobei an diesen Enden auch Lichtstrahlen der Leuchtmittel austreten können.

Besonders vorteilhaft bilden die Leuchtkörper eine einen Hohlraum umschließende geschlossene Bahn aus, wobei insbesondere diese ringförmig ausgebildet ist. Generell sind auch Freiformflächen oder andere Geometrien möglich.

In diesem Fall können auch die Lichtleitbahnen längs geschlossener Bahnen verlaufen.

Gemäß einer vorteilhaften Weiterbildung der Erfindung ist an wenigstens einer Grenzfläche des wenigstens einen Leuchtkörpers ein Reflektor vorgesehen, an welchem in einer Lichtleitbahn geführtes Licht reflektiert wird.

Insbesondere wird von einer Lichtleitbahn auf den Reflektor geführtes Licht in dieselbe oder in eine andere Lichtleitbahn zurückreflektiert.

Durch den Einsatz von Reflektoren wird die Ausnutzung des von den Leuchtmitteln emittierten Lichts weiter verbessert, da das Licht mehrfach durch die Leuchtkörper geführt wird.

Besonders vorteilhaft sind die Leuchtmittel von Leuchtdioden gebildet.

Dabei werden insbesondere Leuchtdioden mit hohen Lichtleistungen gewählt, um die gewünschte Raumausleuchtung mit der erfindungsgemäßen Leuchte zu erzielen. Prinzipiell können dabei einzelne LED-Elemente, LED-Pads oder auch LED-Bänder eingesetzt werden.

Generell können als Leuchtmittel sowohl Leuchtdioden eingesetzt werden, die farbiges Licht oder auch weißes Licht abstrahlen. Dabei können in einzelne Lichtleitbahnen oder auch in einzelne Leuchtkörper Lichtstrahlen unterschiedlicher Farbe eingekoppelt werden.

Besonders vorteilhaft sind den Leuchtmitteln Kühlkörper zugeordnet, wobei insbesondere die Kühlkörper als Kühlrippen ausgebildet sind.

Durch diese Elemente wird ein Überhitzen der Leuchtdioden verhindert. Die Kühlkörper, insbesondere Kühlrippen, bilden dabei vorteilhaft passive Elemente, die allein durch das Durchströmen von Umgebungsluft einen Kühleffekt für die Leuchtdioden bewirken.

Besonders vorteilhaft weist diese eine Halterung auf, in welcher die Leuchtmittel gelagert sind.

Dabei bildet die Halterung zusätzlich ein mehrere Leuchtkörper verbindendes Befestigungsmittel aus.

Durch die Doppelfunktion der Halterung ergibt sich ein kostengünstiger, montagefreundlicher Aufbau der erfindungsgemäßen Leuchte.

Die Erfindung wird im Folgenden anhand der Zeichnungen erläutert. Es zeigen:
- Figur 1:: Draufsicht auf ein Ausführungsbeispiel der erfindungsgemäßen Leuchte.
- Figur 2:: Seitenansicht der Leuchte gemäß Figur 1.
- Figur 3:: Draufsicht auf eine Mantelfläche eines ersten Leuchtkörpers der Leuchte gemäß Figur 1.
- Figur 4:: Draufsicht auf eine Mantelfläche eines zweiten Leuchtkörpers gemäß Figur 1.
- Figur 5:: Detaildarstellung einer die Leuchtkörper verbindenden Halterung mit dort integrierten Leuchtmitteln für die Leuchte gemäß Figur 1.
- Figur 6:: Einzeldarstellung der Halterung gemäß Figur 5.
- Figur 7:: Einzeldarstellung von Halteelementen für die Leuchte gemäß Figur 1.

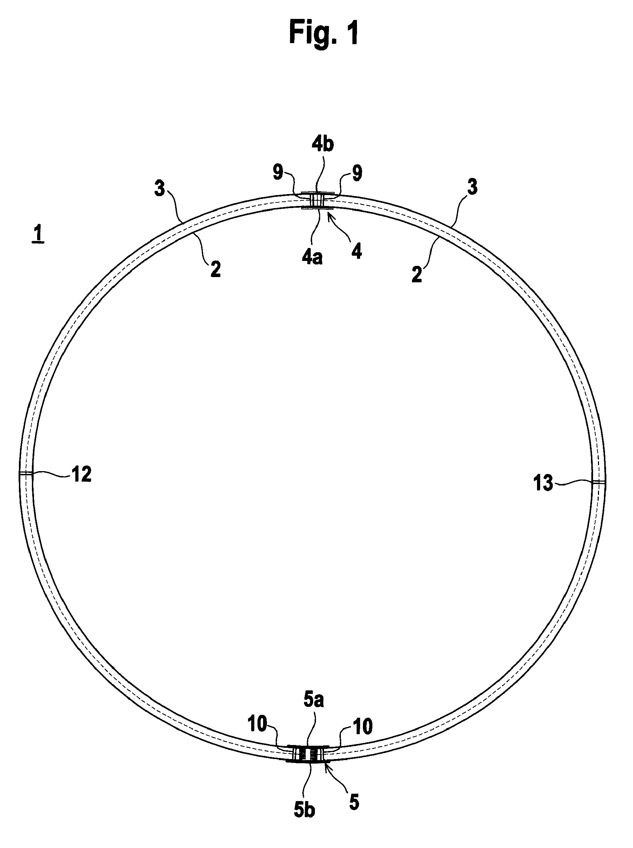

Die Figuren 1 bis 6 zeigen ein Ausführungsbeispiel der erfindungsgemäßen Leuchte 1, welche im vorliegenden Fall von einer Deckenleuchte gebildet ist.

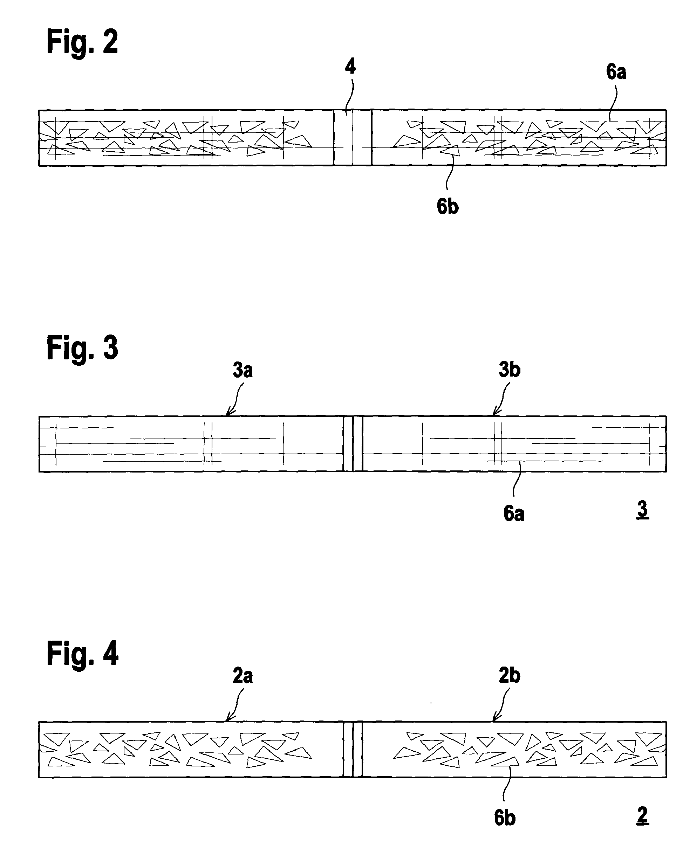

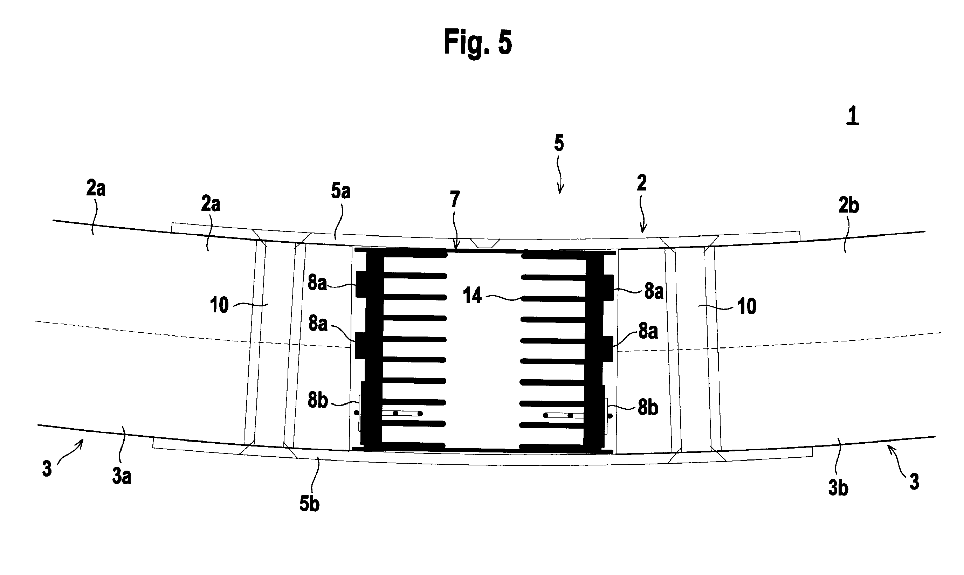

Die Leuchte 1 umfasst eine ringförmige Leuchtkörperanordnung. Diese Leuchtkörperanordnung besteht aus einem ersten Leuchtkörper in Form eines Innenrings 2 und eines zweiten Leuchtkörpers in Form eines Außenrings 3. Der Innenring 2 und der Außenring 3 sind konzentrisch angeordnet, wobei die äußere Mantelfläche des Innenrings 2 dicht und formschlüssig an der inneren Mantelfläche des Außenrings 3 anliegt (Figur 1). Sowohl der Innenring 2 als auch der Außenring 3 bestehen jeweils aus zwei sich über einen Winkelbereich von 180° erstreckenden Halbschalen 2a, 2b, 3a, 3b. Die Halbschalen 3a, 3b des Außenrings 3, dessen Ränder gegenüberliegend angeordnet sind, sind in Figur 3 und 5 dargestellt. Die Halbschalen 2a, 2b des Innenrings 2, deren Ränder gegenüberliegend angeordnet sind, sind in Figur 4 und 5 dargestellt. Die Halbschalen 2a, 2b, 3a, 3b sind in zwei sich diametral gegenüberliegenden Halterungen 4, 5 gelagert und werden so zusammengehalten. Weiterhin sorgen die Halterungen 4, 5 für ein spielfreies, formschlüssiges Anliegen der Mantelfläche des Innenrings 2 und des Außenrings 3.

Der Innenring 2 und der Außenring 3 sind jeweils als transparente Massivkörper ausgebildet und bestehen jeweils aus Acrylglas. Sowohl der Innenring 2 als auch der Außenring 3 bilden kreiszylindrische Körper mit homogenen, gleichförmigen Wandstücken aus.

In die am Innenring 2 angrenzenden Mantelflächen des Außenrings 3 sind wie in Figur 3 dargestellt, Lichtleitbahnen 6a in Form von Einfräsungen eingearbeitet. Entsprechend sind in die am Außenring 3 angrenzenden Mantelflächen des Innenrings 2 wie in Figur 4 dargestellt, Lichtleitbahnen 6a in Form von Einfräsungen eingearbeitet. Durch das Ansetzen des Innenrings 2 bilden die Lichtleitbahnen 6a geschlossene Kanäle. Entsprechend bilden durch das Ansetzen des Außenrings 3 die Lichtleitbahnen 6a des Innenrings 2 geschlossene Kanäle.

Während die Halterung 4 nur zur Verbindung der Halbschalen 2a, 2b, 3a, 3b des Innenrings 2 und des Außenrings 3 dient, dient die Halterung 5 zusätzlich zur Aufnahme von Leuchtmitteln der Leuchte 1. Zwischen den beiden Seitenwänden 5a, 5b der Halterung 5, die wie die Wände der Halterung 4 aus Edelstahl bestehen, ist ein Einsatz 7 eingeschoben, an welchem Leuchtdioden 8a, 8b als Leuchtmittel sowie die zugehörigen elektrischen Anschlussmittel gelagert sind. Dabei emittieren erste Leuchtdioden 8a farbiges Licht und zweite Leuchtdioden 8b weißes Licht.

Das von den Leuchtdioden 8a emittierte farbige Licht wird über die Halbschalen 2a, 2b des Innenrings 2 über deren längsseitigen Ränder so eingekoppelt, dass das Licht in der Lichtleitbahn 6b geführt ist. Entsprechend wird das weiße Licht der Leichtdioden 8b in die Halbschalen 3a, 3b des Außenrings 3 über deren längsseitigen Ränder so eingekoppelt, dass das Licht in den Lichtleitbahn 6a geführt wird. Dadurch bilden die Lichtleitbahnen 6a, 6b von außen gut sichtbare Lichtmuster. Das Licht läuft dabei längs der Lichtleitbahn 6a, wobei bei der Führung in den Lichtleitbahnen 6a, 6b immer ein vorgegebener Teil des Lichts in die Leuchtkörper, das heißt den Innenring 2 oder Außenring 3 eingekoppelt und über diesen zur Beleuchtung des Raumes abgestrahlt wird. Da die Leuchtkörper transparente Diffusoren bilden, wird eine breite Abstrahlcharakteristik des von der Leuchte 1 abgestrahlten Lichts erhalten.

Das von den Leuchtdioden 8a, 8b emittierte Licht kann prinzipiell entlang der gesamten ringförmigen Leuchtkörperanordnung verlaufen. Dies ist dann der Fall, wenn die Ränder der Halbschalen 2a, 2b, 3a, 3b des Innenrings 2 und Außenrings 3 in der Halterung 4 dicht aneinander angrenzen, so dass das Licht die Nahtstellen zwischen den Halbschalen 2a, 2b, 3a, 3b passieren kann. Alternativ können in der Halterung 4 auch ein oder mehrere Reflektoren gelagert sein, so dass an diesen das Licht reflektiert wird.

Wie aus Figur 1 ersichtlich, weist die Halterung 4 zwei Seitenwände 4a, 4b auf, die über Bolzen 9 verbunden sind, wodurch die Halbschalen 2a, 2b, 3a, 3b des Innenrings 2 und des Außenrings 3 verbunden sind. Wie aus den Figuren 1 und 5 ersichtlich, sind auch die Seitenwände 5a, 5b der Halterung 5 durch entsprechende Bolzen 10 verbunden.

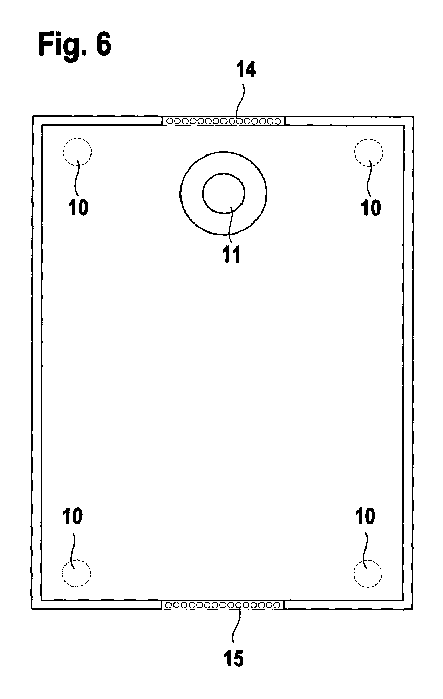

Figur 6 zeigt die Halterung 5 mit den Seitenwänden 5a, 5b und den Bolzen 10 in einer Einzeldarstellung. Weiterhin weist die Halterung 5 einen Befestigungsbolzen 11 auf, an welchem ein nicht dargestelltes Stahlseil zur Aufhängung der Leuchte 1 gelagert werden kann. Ein entsprechendes Befestigungsmittel zur Lagerung eines Stahlseils ist auch bei der Halterung 4 vorgesehen. Weiterhin sind zur Lagerung zweier weiterer Stahlseile, um 90° versetzt zu den Halterungen 4, 5, Befestigungsknöpfe 12, 13 an der Leuchtkörperanordnung fixiert. Somit ist die Leuchte 1 mit insgesamt vier Stahlseilen an einer Decke befestigt.

Schließlich sind an der Ober- und Unterseite der Halterung 5 Kühlrippen 14, 15 vorgesehen (Figuren 5 und 6). Durch die durch die Kühlrippen 14, 15 geführte Umgebungsluft wird eine Kühlung der Leuchtdioden 8a, 8b bewirkt.

Figur 7 zeigt eine Einzeldarstellung eines Halteelements 16 für die Leuchte gemäß Figur 1. Das Halteelement 16 besteht aus zwei Haltesegmenten 17a, 17b, die zur Ausbildung des Halteelements 16 ineinander gesteckt und dadurch aneinander fixiert werden. Das erste Haltesegmente 17a weist ein kreisscheibenförmiges Scheibensegment 18 und ein senkrecht an diesem ausmündendes Wellensegment 19 auf, dessen Symmetrieachse mit der Symmetrieachse des Scheibensegments 18 zusammenfällt.

In entsprechender Weise weist das zweite Haltesegment 17b ein kreisscheibenförmiges Scheibensegment 20 und ein senkrecht an diesem ausmündendes Hohlwellensegment 21 auf, wobei wiederum die Symmetrieachsen des Scheibensegments 20 und des Hohlwellensegments 21 zusammenfallen.

Zur Montage des Halteelements 16 wird, wie in Figur 7 dargestellt, das Wellensegment 19 des ersten Haltesegments 17a in den Hohlraum des Hohlwellensegments 21 des zweiten Haltesegments 17b eingestuft.

Vor dem Einstecken des Wellensegments 19 wird in den Hohlraum des Hohlwellensegments 21 eine nicht dargestellte Kugel eingeführt, die an einem Ende eines Stahlseils fixiert ist, welches zur Aufhängung der Leuchte 1 dient. Die Kugel ist dann durch das eingeschobene Wellensegment 19 des Haltesegments 17a lagefixiert. Das Stahlseil, das an dieser Kugel befestigt ist, ist dann durch eine trichterförmige Öffnung 22 im Bereich des Scheibensegments 20 des Haltesegments 17b nach außen geführt und kann dann zur Aufhängung der Leuchte 1 verwendet werden.

Der Querschnitt der trichterförmigen Öffnung 22 ist im Bereich der Ausmündung am Hohlraum des Hohlwellensegments 21 kleiner als der Querschnitt des Hohlraums des Hohlwellensegments 21. Somit kann die Kugel nicht durch die trichterförmige Öffnung 22 geführt werden, das heißt die im Hohlraum gelagerte Kugel sorgt für einen sicheren Halt des Stahlseils im Haltelement 16.

Jeweils ein Halteelement 16 gemäß Figur 7 ersetzt die Befestigungsköpfe 12 und 13 sowie die Halterung 4 der Leuchte von Figur 1.

Die die Befestigungsköpfe 12, 13 ersetzenden Halterungselemente 16 dienen nur zur Lagerung von Stahlseilen. Das die Halterung 4 ersetzende Halteelement 16 dient zudem zur Fixierung des Innenrings 2 und des Außenrings 3. Hierzu können an den Innenseiten der Scheibensegmente 18, 20 Vorsprünge oder dergleichen vorgesehen sein, die in Einkerbungen in den Mantelflächen des Innenrings 2 und Außenrings 3 greifen.

### Bezugszeichenliste

- (1): Leuchte
- (2): Innenring
- (2a): Halbschale
- (2b): Halbschale
- (3): Außenring
- (3a): Halbschale
- (3b): Halbschale
- (4): Halterung
- (4a): Seitenwand
- (4b): Seitenwand
- (5): Halterung
- (5a): Seitenwand
- (5b): Seitenwand
- (6a): Lichtleitbahn
- (6b): Lichtleitbahn
- (7): Einsatz
- (8a): Leuchtdiode
- (8b): Leuchtdiode
- (9): Bolzen
- (10): Bolzen
- (11): Befestigungsbolzen
- (12): Befestigungsknopf
- (13): Befestigungsknopf
- (14): Kühlrippen
- (15): Kühlrippen
- (16): Halteelement
- (17a): Haltesegment
- (17b): Haltesegment
- (18): Scheibensegment
- (19): Wellensegment
- (20): Scheibensegment
- (21): Hohlwellensegment
- (22): trichterförmige Öffnung

## Patentansprüche

1. Leuchte (1) zur Beleuchtung eines Raumes oder eines Bereiches eines Raumes mit wenigstens einem Leuchtkörper, in welchem Lichtleitbahnen (6a, 6b) vorgesehen sind und mit Leuchtmitteln, welche am oder im Leuchtkörper so angeordnet sind, dass von den Leuchtmitteln emittiertes Licht in die Lichtleitbahnen (6a, 6b) eingekoppelt wird, wobei der Leuchtkörper wenigstens teilweise transparent ist und dazu ausgebildet ist, dass das in den Lichtleitbahnen (6a) geführte Licht über den Leuchtkörper zur Beleuchtung des Raumes oder des Bereiches des Raumes abgestrahlt wird.

2. Leuchte nach Anspruch 1, **dadurch gekennzeichnet, dass** die Lichtleitbahnen (6a, 6b) von in den oder jeden Leuchtkörper eingearbeiteten Kanälen gebildet sind.

3. Leuchte nach Anspruch 2, **dadurch gekennzeichnet, dass** die die Lichtleitbahn (6a, 6b) ausbildenden Kanäle Einfräsungen im jeweiligen Leuchtkörper bilden, welche an Mantelflächen des Leuchtkörpers ausmünden.

4. Leuchte nach einem der Ansprüche 1 bis 3, **dadurch gekennzeichnet, dass** an wenigstens einer Grenzfläche des wenigstens einen Leuchtkörpers ein Reflektor vorgesehen ist, an welchem in einer Lichtleitbahn (6b) geführtes Licht reflektiert wird, wobei von einer Lichtleitbahn (6b) auf den Reflektor geführtes Licht in dieselbe oder in eine andere Lichtleitbahn (6a, 6b) zurückreflektiert wird.

5. Leuchte nach einem der Ansprüche 1 bis 4, **dadurch gekennzeichnet, dass** der wenigstens ein Leuchtkörper ein transparenter Massivkörper ist, welcher insbesondere aus Acrylglas besteht.

6. Leuchte nach einem der Ansprüche 1 bis 5, **dadurch gekennzeichnet, dass** der oder die Leuchtkörper eine einen Hohlraum umschließende, geschlossene Bahn ausbilden.

7. Leuchte nach einem der Ansprüche 1 bis 6, **dadurch gekennzeichnet, dass** diese ringförmig ausgebildet ist.

8. Leuchte nach Anspruch 7, **dadurch gekennzeichnet, dass** diese zwei konzentrische, aneinander angrenzende, ringförmige Leuchtkörper aufweist.

9. Leuchte nach Anspruch 8, **dadurch gekennzeichnet, dass** in die Leuchtkörper Licht mit unterschiedlichen Farben eingekoppelt wird.

10. Leuchte nach einem der Ansprüche 1 bis 9, **dadurch gekennzeichnet, dass** die Leuchtmittel von Leuchtdioden (8a, 8b) gebildet sind, welche farbiges oder weißes Licht emittieren.

11. Leuchte nach einem der Ansprüche 1 bis 10, **dadurch gekennzeichnet, dass** den Leuchtmitteln Kühlkörper zugeordnet sind.

12. Leuchte nach Anspruch 11, **dadurch gekennzeichnet, dass** die Kühlkörper als Kühlrippen (15) ausgebildet sind.

13. Leuchte nach einem der Ansprüche 1 bis 12, **dadurch gekennzeichnet, dass** diese eine Halterung (4, 5)aufweist, in welcher die Leuchtmittel gelagert sind.

14. Leuchte nach Anspruch 13, **dadurch gekennzeichnet, dass** die Halterung (4, 5) zusätzlich ein mehrere Leuchtkörper verbindendes Befestigungsmittel ausbildet.

15. Leuchte nach einem der Ansprüche 1 bis 14, **dadurch gekennzeichnet, dass** diese eine Deckenleuchte, eine Wandleuchte oder eine Bodenleuchte ist.
